# EUROPÄISCHE PATENTANMELDUNG

(11) **EP 2 662 647 A2**
(43) Veröffentlichungstag der Anmeldung: **13.11.2013**
(21) Anmeldenummer: 13002424.3
(22) Anmeldetag: 07.05.2013
(51) Int. Cl.: F25B 41/06

(54) **Kühl- und/oder Gefriergerät**

(30) Priorität: 11.05.2012 DE 102012009453; 02.08.2012 DE 102012015411
(71) Anmelder: Liebherr-Hausgeräte Ochsenhausen GmbH, 88416 Ochsenhausen (DE)
(72) Erfinder: Ertel, Thomas, 88299 Leutkirch (DE); Gindele, Thomas, 88299 Leutkirch (DE)
(74) Vertreter: Herrmann, Uwe

(57) **Zusammenfassung**

Die vorliegende Erfindung betrifft ein Kühl- und/oder Gefriergerät mit wenigstens einem Kältemittelkreislauf, wobei der Kältemittelkreislauf wenigstens einen Verdampfer sowie wenigstens ein Mittel zur Verringerung des Druckes des den Kältemittelkreislauf durchströmenden Kältemittels aufweist, das vorzugsweise in Strömungsrichtung des Kältemittels stromaufwärts des Verdampfers angeordnet ist, wobei es sich bei dem Mittel um wenigstens ein Ventil handelt oder dass das Mittel wenigstens ein Ventil umfaßt, wobei es sich bei dem Ventil um ein Expansionsventil und/oder um ein Stoppventil handelt.

## Beschreibung

Die vorliegende Erfindung betrifft ein Kühl- und/oder Gefriergerät mit wenigstens einem Kältemittelkreislauf, wobei der Kältemittelkreislauf wenigstens einen Verdampfer sowie wenigstens ein Mittel zur Verringerung des Druckes des den Kältemittelkreislauf durchströmenden Kältemittels aufweist, das vorzugsweise in Strömungsrichtung des Kältemittels stromaufwärts des Verdampfers angeordnet ist.

Aus dem Stand der Technik ist es bekannt, in einem Kältemittelkreislauf zwischen dem Verdampfer und dem Verflüssiger eine Kapillare einzusetzen, bei deren Durchströmung das Kältemittel einen Druckverlust von einem relativ hohen Druckniveau im Bereich des Verflüssigers auf ein relativ geringes Druckniveau am Einlass des Verdampfers erfährt.

Ein Nachteil bei dem Einsatz von Kapillaren zum Zwecke der Drosselung besteht darin, dass diese Kapillaren nur einen idealen Arbeitspunkt aufweisen. Der Druckverlustbeiwert der Kapillare ist nicht veränderbar. Unterschiedliche Druckverluste bzw. unterschiedliche Druckverlustbeiwerte werden bei aus dem Stand der Technik bekannten Lösungen durch unterschiedlich lange Kapillaren eingestellt, was vergleichsweise umständlich ist und insbesondere keine Anpassung an unterschiedliche angeforderte Kälteleistungen des Gerätes erlaubt.

Der vorliegenden Erfindung liegt daher die Aufgabe zugrunde, ein Kühl- und/oder Gefriergerät der eingangs genannten Art dahingehend weiterzubilden, dass variabel auf Anforderungen des Kältesystems reagiert werden kann.

Diese Aufgabe wird durch ein Kühl- und/oder Gefriergerät mit den Merkmalen des Anspruchs 1 gelöst. Danach ist vorgesehen, dass es sich bei dem Mittel zur Erzeugung eines Druckverlustes um wenigstens ein Ventil handelt oder dass das Mittel wenigstens ein Ventil umfaßt, wobei es sich bei dem Ventil um ein Expansionsventil und/oder um ein Stoppventil handelt. Vorzugsweise ist vorgesehen, dass eine Kombination aus einem Expansionsventil und einem Stoppventil oder eine Kombination aus einem Stoppventil und einer Kapillare eingesetzt wird.

Vorzugsweise ist vorgesehen, dass es sich um ein µ-Expansionsventil bzw. µ-Stoppventil handelt. Vorzugsweise ist das Ventil bzw. Mikroventil so ausgebildet, dass es innerhalb des Verflüssiger- oder Verdampferrohres platziert werden kann bzw. darin platziert ist.

Insoweit ist eine Bauweise vergleichbar mit der in der Mikrosystemtechnik bzw. in der Mikrofluidik denkbar.

Durch den Einsatz wenigstens eines Expansionsventils als Drosselorgan bzw. zur Erzeugung des Druckabfalls lässt sich eine variable Einstellung des Druckverlustbeiwertes und damit auch des Volumenstroms an Kältemittel, der das Ventil durchströmt und somit auch eine Anpassung an Anforderungen des Kältesystems bzw. an die angeforderte Kälteleistung erreichen. Durch das Expansionsventil besteht die Möglichkeit, den Arbeitspunkt je nach Anforderung ideal einzustellen. Dies unterscheidet das Expansionsventil von den aus dem Stand der Technik bekannten Kapillaren, die abhängig von Ihrer Länge und von Ihrem Innendurchmesser nur genau einen idealen Arbeitspunkt aufweisen. Die unterschiedlichen Längen bisher eingesetzter Kapillaren können nunmehr durch ein Ventil ersetzt werden, was zu einer Vereinheitlichung und damit auch zu einer kostengünstigen Lösung führt.

Abgesehen davon ist durch das Ventil eine bedarfsgerechte Anpassung des Druckverlustbeiwertes möglich, so dass der Kältemittelkreislauf möglichst effizient und im Bereich seines optimalen Arbeitspunktes betrieben werden kann.

Ein weiterer Vorteil besteht darin, dass bislang leistungsstärkere Kompressoren als nötig eingesetzt werden, um Reserven für den Einsatz in Tropengebieten bereitzuhalten. Wird ein Ventil gemäß der vorliegenden Erfindung eingesetzt, können auch schwächere Kompressoren verwendet werden, was zu einer Kostenersparnis führt.

Das Expansionsventil ist verstellbar ausgeführt, d.h. es können je nach Bedarf unterschiedliche Druckverlustbeiwerte bzw. Durchflussraten eingestellt werden.

Bei dem Ventil kann es sich auch um ein Stoppventil handeln. Vorzugsweise besteht das Ventil aus einer Kombination aus einem Expansionsventil und einem Stoppventil, das heißt die Stoppventilfunktion kann in das Expansionsventil integriert sein. Dies sorgt für eine Effizienzverbesserung, in dem die verschiedenen Druckniveaus auch in der Standzeit des Kompressors gehalten werden.

Das Expansionsventil hat die Aufgabe, einen Druckverlust des Kältemittels bei Durchströmen des Expansionsventils zu erzeugen. Das Stoppventil hat die Aufgabe, in der Standzeit des Kompressors einen sofortigen Druckausgleich zu verhindern und ein bestimmtes Druckniveau stromaufwärts und stromabwärts des Stoppventils einzustellen. Auch auf diese Weise ist es möglich, eine Effizienzverbesserung des Kältemittelkreislaufes zu erzielen.

In weiterer Ausgestaltung der Erfindung ist vorgesehen, dass das Ventil am oder im Eingang des Verdampfers und/oder am oder im Verflüssigerausgang und/oder am oder im Trocknerausgang angeordnet ist. Es kann auch an bzw. in wenigstens einem Rohr bzw. an bzw. in wenigstens einer Kapillare z. B. im Bereich des Verdampfereingangs oder im Bereich des Trockners angeordnet sein.

In weiterer Ausgestaltung der Erfindung ist vorgesehen, dass sich in dem Kältemittelkreislauf wenigstens ein Mehrwegeventil befindet, das derart angeordnet und ausgebildet ist, dass das Kältemittel je nach Stellung des Mehrwegeventils wahlweise unterschiedliche Wege des Kältemittelkreislaufes durchströmen kann und dass das genannte Ventil an oder in dem Mehrwegeventil angeordnet ist. Bei dem Mehrwegeventil kann es sich um ein bistabiles Magnetventil oder auch um ein Schrittmotorventil handeln.

Das Ventil kann an einer Position im Kältemittelkreislauf angeordnet sein, in der das Kältemittel flüssig, dampfförmig oder gemischt, das heißt dampfförmig/flüssig vorliegt.

In weiterer Ausgestaltung der Erfindung ist vorgesehen, dass das Ventil innerhalb eines Rohres des Kältemittelkreislaufes oder auch zwischen zwei Rohrabschnitten des Kältemittelkreislaufes angeordnet ist. Denkbar ist es weiterhin, dass es auf dem Rohr angeordnet ist (Impulsgeber) und dass der Aktuator des Ventils im Rohr angeordnet ist, um auf den Kältemittelfluss Einfluss zu nehmen. Das Zusammenwirken zwischen dem Aktuator und dem Impulsgeber kann beispielsweise magnetisch bzw. durch Magnetkraft erfolgen.

Die Art der Befestigung des Ventils kann beispielsweise durch Kleben und/oder Quetschen des Rohres vor und/oder nach dem Ventil erfolgen.

In weiterer Ausgestaltung der Erfindung ist vorgesehen, dass wenigstens ein Sensor zur Erfassung der Überhitzung des Kältemittels am Verdampferausgang oder am Kompressoreingang oder in der Saugleitung zwischen Verdampfer und Kompressor des Kältemittelkreislaufes vorgesehen ist, wobei dieser Sensor vorzugsweise als Temperatur- oder Drucksensor ausgebildet ist.

Denkbar ist es beispielsweise, dass der Sensor am Verdampferausgang oder in der Saugleitung angeordnet ist oder auch dass der Sensor im Ventilkörper des Ventils angeordnet ist.

Denkbar ist es beispielsweise, einen Temperaturfühler einzusetzen, um die Überhitzung des Kältemittels nach Durchströmen des Verdampfers zu erfassen. Dieser Temperaturfühler kann beispielsweise am Verdampferausgang oder auch in der Saugleitung zwischen Verdampfer und Kompressor angeordnet sein. Eine Verbindung zum Ventilkörper kann per Kabel oder auch per Funk erfolgen.

In weiterer Ausgestaltung der Erfindung ist vorgesehen, den Temperaturfühler in den Ventilkörper des erfindungsgemäßen Ventils zu integrieren. Eine Verbindung zu der Saugleitung kann dadurch erfolgen, dass der Ventilkörper wärmeleitend mit der Saugleitung verbunden ist, was beispielsweise durch Einclipsen, Löten, Kleben oder auch durch einen Metallkörper als Distanzstück möglich ist, wobei der Metallkörper einen Wärmeübergang zwischen Saugleitung und Ventilkörper ermöglicht.

Alternativ oder zusätzlich dazu ist es denkbar, einen Drucksensor zum Messen der Überhitzung vorzusehen. Dieser Drucksensor kann ebenfalls am Verdampferausgang oder am Kompressoreingang oder in der Saugleitung angeordnet sein. Des Weiteren ist es denkbar, diesen Drucksensor in den Ventilkörper zu integrieren. Eine Verbindung zum Ventilköper bzw. eine Verbindung zur Saugleitung kann beispielsweise über eine Kapillare, mittels eines Kabels oder auch per Funk erfolgen.

In weiterer Ausgestaltung der Erfindung ist vorgesehen, dass das Gerät wenigstens eine Steuer- oder Regelungseinheit aufweist, die mit dem Ventil derart in Verbindung steht, dass die Ventilstellung durch die Steuer- oder Regelungseinheit veränderbar ist, wobei die Steuer- oder Regelungseinheit derart ausgebildet ist, dass sie die Veränderung der Ventilstellung in Abhängigkeit eines oder mehrerer der folgenden Parameter vornimmt: Überhitzung des Kältemittels am Verdampferausgang oder am Kompressoreingang oder in der Saugleitung zwischen Verdampfer und Kompressor und/oder Kompressordrehzahl und/oder Umgebungstemperatur und/oder zeitlicher Abstand zur Verdampferabtauung, Stromfluss durch den Kompressor, Drehmoment des Kompressors, Abgabeleistung des Kompressors, Aufnahmeleistung des Kompressors, Druckdifferenz über den Kompressor und/oder Laufzeit des Kompressors.

Grundsätzlich ist es ebenfalls denkbar, die Steuer- oder Regelungseinheit derart auszuführen bzw. die Steuerung oder Regelung derart vorzunehmen, dass nicht die Messung der Überhitzung vorgenommen wird, sondern dass die Steuerung bzw. Regelung aufgrund einer oder mehrerer der folgenden Messgrößen bzw. Kompressordaten vorgenommen wird: Kompressordrehzahl, Umgebungstemperatur, zeitlicher Abstand zur Verdampferabtauung, Laufzeit des Kompressors, Stromfluss durch den Kompressor, Drehmoment des Kompressors, Abgabeleistung des Kompressors, Aufnahmeleistung des Kompressors, Druckdifferenz über den Kompressor.

Grundsätzlich ist es denkbar, dass eine oder mehrere der genannten Messgrößen der Steuer- oder Regelungseinheit zugeführt werden, die sodann entsprechend die Ventilstellung und somit den Strömungsquerschnitt durch das Ventil verändert bzw. eine solche Veränderung veranlasst. Dies gilt sowohl für den Fall, dass die Steuer- oder Regelungseinheit Bestandteil der Geräteelektronik ist, die den Betrieb des gesamten Kühl- und/oder Gefriergerätes steuert oder regelt, als auch für den Fall, dass die Steuerung oder Regelung des Ventils ventil-intern vorgenommen wird, d.h. jedenfalls nicht mittels der genannten Geräteelektronik. In diesem Fall kann an dem Ventil ein Steuerungseingang für die genannten Messgrößen bzw. Kompressordaten vorgesehen sein, wobei das Ventil in Abhängigkeit des zugeführten Messsignals eingestellt wird. In diesem Fall kann eine den Ventil zugeordnete Steuer- oder Regelungseinheit vorgesehen sein, die in oder an dem Ventil angeordnet sein kann und eine Einstellung des Ventils basierend auf der oder den zugeführten Messgrößen vornimmt.

In weiterer Ausgestaltung der Erfindung ist vorgesehen, dass das Ventil derart ausgebildet ist, dass die Ventilstellung elektrisch, mechanisch, insbesondere händisch, oder auch durch Magnetkraft veränderbar ist. Wie bereits oben ausgeführt, ist es denkbar, in das Expansionsventil die Stoppfunktion zu integrieren.

Denkbar ist es, dass das Ventil derart ausgebildet ist, dass sein Druckverlustbeiwert durch eine Verstellung des Öffnungsquerschnittes vorgenommen wird, den das Kältemittel durchströmt oder dass die unterschiedlichen Durchflüsse nicht durch die Öffnungsgröße realisiert werden, sondern durch die Schaltfrequenz, so dass diese den Durchfluss regelt.

Weiterhin ist es denkbar, dass in das Ventil schallreduzierende Elemente integriert sind, was insbesondere dann von Vorteil ist, wenn hohe Schaltfrequenzen realisiert werden.

In einer weiteren Ausgestaltung der Erfindung ist vorgesehen, dass ein innerer Wärmeaustausch zwischen der Saugleitung und dem Verflüssiger bzw. dem Verflüssigerausgang mit oder ohne Magnetventilfunktion vorgenommen wird. Das Magnetventil kann mit zwei oder mehr Kapillaren in Verbindung stehen, die je nach Stellung des Magnetventils von Kältemittel durchströmt werden.

Die Saugleitung und/oder der Verflüssiger kann für den besseren Wärmeaustausch als sogenannter Microchannel ausgeführt sein, das heißt aus einem Rohr bestehen oder aus mehreren Rohren bestehen, die einen vergleichsweise kleinen Querschnitt aufweisen. Das oder die Rohre können einen Innendurchmesser bzw. einen hydraulischen Durchmesser im Bereich von 0,1 mm - 5 mm haben, vorzugsweise 8> 1 mm. Der Querschnitt des oder der Rohre kann im Bereich zwischen 1 mm² und 30 mm², vorzugsweise im Bereich zwischen 4 mm² und 20 mm² liegen. Der Verflüssiger kann als Microchannel-Verflüssiger ausgeführt sein und eine Mehrzahl derartiger Rohre aufweisen, die beispielsweise nebeneinander oder auch übereinander oder in anderer Anordnung vorliegen, beispielsweise in Form eines Flachrohres, in dem mehrere derartiger Kanäle bzw. Rohre angeordnet sind.

Des weiteren kann eine Steuer- oder Regelungseinheit vorgesehen sein, die mit dem Ventil derart in Verbindung steht, dass die Ventilstellung durch die Steuer- oder Regelungseinheit veränderbar ist, wobei die Steuer- oder Regelungseinheit derart ausgebildet ist, dass sie die Veränderung der Ventilstellung in Abhängigkeit vom Betriebsmodus des Kühl- und/oder Gefriergerätes vornimmt. Bei dieser Steuer- oder Regelungseinheit kann es sich um dieselbe oder eine andere Steuer- oder Regelungseinheit handeln als die oben genannte Steuer- oder Regelungseinheit.

Denkbar ist es, dass der Betriebsmodus einen Prüfmodus zur Erzeugung maximaler Kälteleistung oder einen Vakuummodus zur Erzeugung von Vakuum in dem Kältemittelkreislauf umfasst.

So ist es beispielsweise denkbar, dass das Ventil in seine vollständig geöffnete Stellung gebracht wird, wenn im Rahmen der Fertigung des Gerätes Vakuum gezogen werden soll. Dieser Evakuierungsvorgang verläuft schneller und besser als bei der Verwendung einer herkömmlichen Kapillare und es lässt sich darüber hinaus das zweiseitige Vakuumziehen auf der Hochruckseite und auf der Niederdruckseite vermeiden.

Eine besonders hohe Strömungsrate ist auch dann realisierbar, wenn wenigstens eine das Ventil umgehende Bypassleitung vorgesehen ist, die ggf. mittels eines Ventils absperrbar ist und geöffnet werden kann. Durch Öffnen der Bypassleitung lässt sich insbesondere bei gleichzeitig geöffnetem Ventil ein besonders großer Strömungsquerschnitt und damit ein schnelles Evakuieren erreichen.

Ein weiterer Betriebsmodus ist der Prüfmodus, in dem das Gerät einer Prüfung unterzogen wird. Das Prüfprogramm kann auf das Ventil zugreifen und dieses beispielsweise so einstellen, dass eine maximale Kälteleistung erzeugt wird, um die Prüfdauer der Abkühlzeit zu verkürzen.

Das Ventil ist vorzugsweise derart ausgebildet, dass es zumindest im vollständig geöffneten Zustand einen größeren Strömungsquerschnitt aufweist als eine herkömmliche Kapillare eines Kältemittelkreislaufes eines Kühl- und/oder Gefriergerätes.

Weitere Einzelheiten und Vorteile der Erfindung werden anhand eines im Folgenden beschriebenen Ausführungsbeispiels näher erläutert:

Das Ausführungsbeispiel betrifft einen Kältemittelkreislauf mit einem Kompressor, mit einem in Strömungsrichtung des Kältemittels nachgeschalteten Verflüssiger, mit einem Expansionsventil, das in dem Rohrleitungsabschnitt zwischen Verflüssiger und Verdampfer oder am Verflüssigerausgang oder am Verdampfereingang angeordnet ist sowie mit einer Saugleitung, die sich zwischen dem Verdampfer und dem Kompressor erstreckt.

Bei dem Ventil handelt es sich um ein sogenanntes Expansionsventil, dessen Druckverlustbeiwert verstellbar ist, beispielsweise dadurch, dass der freie Strömungsquerschnitt des Ventils veränderbar ist. Diese Änderung kann elektrisch, mechanisch, händisch oder auch magnetisch erfolgen.

In der Saugleitung bzw. am Verdampfereingang oder am Kompressoreingang kann ein Sensor vorgesehen sein, der zur Messung der Überhitzung des Kältemittels im Verdampfer dient. Dieser Sensor bzw. Fühler kann als Temperaturfühler oder auch als Druckfühler ausgeführt sein. Er misst die Überhitzung des Kältemittels am Verdampferausgang und steht unmittelbar oder mittelbar mit dem genannten Expansionsventil in Verbindung. Eine mittelbare Verbindung ist beispielsweise dadurch denkbar, dass der durch den Temperatur- oder Druckfühler gemessene Wert an eine Steuer- oder Regelungseinheit übergeben wird und diese darauf hin das Expansionsventil ansteuert bzw. dessen Öffnungsquerschnitt oder Druckverlustbeiwert je nach Bedarf ändert.

Bei dem Expansionsventil handelt es sich vorzugsweise um ein Mikroexpansionsventil, das als Magnetventil ausgeführt sein kann.

Denkbar ist der Einsatz eines Expansionsventils mit wenigstens einem Einlass und wenigstens einem Auslass und wenigstens einem zwischen Einlass und Auslass angeordneten Verstellelement, das den freien Strömungsquerschnitt des Ventils je nach Bedarf verändert.

Dieses Verstellelement wird je nach Bedarf bzw. je nach Magnetkraft in seiner Position verändert, so dass sich unterschiedliche freie Strömungsquerschnitte im Ventil ergeben und somit der Druckverlustbeiwert und damit auch die Durchströmungsrate des Kältemittels durch das Ventil einstellbar sind. Denkbar ist es, dass die Strömungsquerschnitte und/oder die Strömungslängen im Ventil geändert werden.

Diese Einstellung erfolgt in Abhängigkeit des von dem genannten Temperatur- oder Druckfühler gemessenen Wertes, gegebenenfalls unter Zwischenschaltung einer Steuer- oder Regelungseinheit.

Denkbar ist es beispielsweise, mittels eines Temperaturfühlers am Verdampferausgang oder in der Saugleitung die Überhitzung des Kältemittels zu messen und das Expansionsventil z. B. mittels eines Kabels oder per Funk derart anzusteuern, dass der freie Querschnitt des Ventils bzw. die Durchflussrate durch das Ventil auf den gewünschten Wert eingestellt wird, so dass ein optimaler Betriebspunkt erhalten wird.

Zusätzlich ist vorzugsweise in das Expansionsventil eine Stoppventilfunktion integriert, die derart ausgebildet ist, dass verschiedene Druckniveaus auch in der Standzeit des Kompressors gehalten werden.

Durch den Einsatz eines Expansionsventils mit veränderbarem Druckverlustbeiwert ist es möglich, den Arbeitspunkt je nach Anforderung bzw. je nach angeforderter Kälteleistung einzustellen, was bei aus dem Stand der Technik bekannten Kapillaren nicht möglich ist. Die bekannten Kapillaren weisen im Gegensatz zu dem erfindungsgemäßen Ventil stets einen konstanten Druckverlustbeiwert auf, so dass eine flexible Anpassung an unterschiedliche Kälteanforderungen nicht über die Kapillare möglich ist.

Ein weiterer Vorteil der Erfindung besteht darin, dass die bisher eingesetzten unterschiedlich langen Kapillaren durch ein Ventil ersetzt werden können, so dass eine Vereinheitlichung möglich ist, es sei denn, es handelt sich um eine Ausführung mit einem Stoppventil. In diesem Fall ist eine Kapillare weiterhin erforderlich.

## Patentansprüche

1. Kühl- und/oder Gefriergerät mit wenigstens einem Kältemittelkreislauf, wobei der Kältemittelkreislauf wenigstens einen Verdampfer sowie wenigstens ein Mittel zur Verringerung des Druckes des den Kältemittelkreislauf durchströmenden Kältemittels aufweist, das vorzugsweise in Strömungsrichtung des Kältemittels stromaufwärts des Verdampfers angeordnet ist, **dadurch gekennzeichnet, dass** es sich bei dem Mittel um ein wenigstens Ventil handelt oder dass das Mittel wenigstens ein Ventil umfaßt, wobei es sich bei dem Ventil um ein Expansionsventil und/oder um ein Stoppventil handelt.

2. Kühl- und/oder Gefriergerät nach Anspruch 1 oder 2, **dadurch gekennzeichnet, dass** das Ventil am oder im Eingang des Verdampfers und/oder am oder im Ausgang eines Verflüssigers des Kältemittelkreilaufes und/oder am oder in einem Trockner des Kältemittelkreislaufes und/oder einem Leitungsabschnitt des Kältemittelkreislaufes, vorzugsweise in dem Abschnitt zwischen Verflüssiger und Verdampfer angeordnet ist.

3. Kühl- und/oder Gefriergerät nach einem der vorhergehenden Ansprüche, **dadurch gekennzeichnet, dass** in dem Kältemittelkreislauf wenigstens ein Mehrwegeventil angeordnet ist, das derart angeordnet und ausgebildet ist, dass das Kältemittel je nach Stellung des Mehrwegeventils wahlweise unterschiedliche Wege des Kältemittelkreislaufes durchströmen kann und dass das Ventil an oder in dem Mehrwegeventil angeordnet ist.

4. Kühl- und/oder Gefriergerät nach einem der vorhergehenden Ansprüche, **dadurch gekennzeichnet, dass** das Ventil innerhalb eines Rohres des Kältemittelkreislaufes und/oder zwischen zwei Rohrabschnitten des Kältemittelkreislaufes und/oder auf einem Rohr des Kältemittelkreislaufes angeordnet ist, wobei ein Impulsgeber auf dem Rohr und der mit diesem zusammenwirkende Aktuator in dem Rohr angeordnet ist.

5. Kühl- und/oder Gefriergerät nach einem der vorhergehenden Ansprüche, **dadurch gekennzeichnet, dass** wenigstens ein Sensor zur Erfassung der Überhitzung des Kältemittels am Verdampferausgang oder in der Saugleitung zwischen Verdampfer und Kompressor des Kältemittelkreislaufes vorgesehen ist, wobei der Sensor vorzugsweise als Temperatur- oder Drucksensor ausgebildet ist.

6. Kühl- und/oder Gefriergerät nach Anspruch 5, **dadurch gekennzeichnet, dass** der Sensor am Verdampferausgang, am Kompressoreingang oder in der Saugleitung zwischen Verdampfer und Kompressor angeordnet ist oder dass der Sensor im oder am Ventilkörper des Ventils angeordnet ist.

7. Kühl- und/oder Gefriergerät nach einem der vorhergehenden Ansprüche, **dadurch gekennzeichnet, dass** wenigstens eine Steuer- oder Regelungseinheit vorgesehen ist, die mit dem Ventil derart in Verbindung steht, dass die Ventilstellung durch die Steuer- oder Regelungseinheit veränderbar ist, wobei die Steuer- oder Regelungseinheit derart ausgebildet ist, dass sie die Veränderung der Ventilstellung in Abhängigkeit eines oder mehrerer der folgenden Parameter vornimmt: Überhitzung des Kältemittels am Verdampferausgang oder am Kompressoreingang oder in der Saugleitung zwischen Verdampfer und Kompressor, Kompressordrehzahl, Umgebungstemperatur, zeitlicher Abstand zur letzten Verdampferabtauung, Stromfluss, Drehmoment, Abgabeleistung, Aufnahmeleistung, Druckdifferenz oder Laufzeit des Kompressors.

8. Kühl- und/oder Gefriergerät nach einem der vorhergehenden Ansprüche, **dadurch gekennzeichnet, dass** wenigstens eine Steuer- oder Regelungseinheit vorgesehen ist, die mit dem Ventil derart in Verbindung steht, dass die Ventilstellung durch die Steuer- oder Regelungseinheit veränderbar ist, wobei die Steuer- oder Regelungseinheit derart ausgebildet ist, dass sie die Veränderung der Ventilstellung in Abhängigkeit vom Betriebsmodus des Kühl- und/oder Gefriergerätes vornimmt.

9. Kühl- und/oder Gefriergerät nach Anspruch 8, **dadurch gekennzeichnet, dass** der Betriebsmodus einen Prüfmodus insbesondere zur Erzeugung maximaler Kälteleistung oder einen Vakuummodus zur Erzeugung von Vakuum in dem Kältemittelkreislauf umfasst.

10. Kühl- und/oder Gefriergerät nach einem der vorhergehenden Ansprüche, **dadurch gekennzeichnet, dass** das Ventil zumindest im vollständig geöffneten Zustand einen größeren Strömungsquerschnitt aufweist als eine herkömmliche Kapillare eines Kältemittelkreislaufes eines Kühl- und/oder Gefriergerätes.

11. Kühl- und/oder Gefriergerät nach einem der vorhergehenden Ansprüche, **dadurch gekennzeichnet, dass** wenigstens eine das Ventil umgehende Bypassleitung vorgesehen ist.

12. Kühl- und/oder Gefriergerät nach einem der. vorhergehenden Ansprüche, **dadurch gekennzeichnet, dass** das Ventil derart ausgebildet ist, dass die Ventilstellung elektrisch, mechanisch oder durch Magnetkraft veränderbar ist.

13. Kühl- und/oder Gefriergerät nach einem der vorhergehenden Ansprüche, **dadurch gekennzeichnet, das** Ventil derart ausgebildet ist, dass sein Druckverlustbeiwert bzw. die Strömungsrate des Kältemittels durch das Ventil durch die Schaltfrequenz veränderbar ist, mit der unterschiedliche Öffnungsquerschnitte des Ventils, vorzugsweise eine Auf-/Zu-Stellung des Ventils eingestellt werden.

14. Kühl- und/oder Gefriergerät nach einem der vorhergehenden Ansprüche, **dadurch gekennzeichnet, dass** das Ventil derart ausgebildet, dass sein Druckverlustbeiwert bzw. die Strömungsrate des Kältemittels durch das Ventil durch eine Veränderung des Strömungsquerschnittes im Ventil für das Kältemittel veränderbar ist.
